# EUROPEAN PATENT APPLICATION

(11) **EP 3 348 680 A1**
(43) Date of publication of application: **18.07.2018**
(21) Application number: 16843950.3
(22) Date of filing: 07.09.2016
(51) Int. Cl.: D01F 6/62, B60C 9/00, D02G 3/48

(54) **FIBER FOR TIRE, RUBBER/FIBER COMPLEX, AND TIRE**

(30) Priority: 08.09.2015 JP 2015177015
(71) Applicant: Bridgestone Corporation, Tokyo 104-8340 (JP); Synvina C.V., 1014 BV Amsterdam (NL)
(72) Inventor: IKEDA, Yuji, Tokyo 104-8340 (JP); SUGIMOTO, Kenichi, Tokyo 104-8340 (JP); DAM, Matheus Adrianus, 1014 BV Amsterdam (NL)
(74) Representative: Oxley, Robin John George
(86) International application number: PCT/JP2016/004087
(87) International publication number: WO 2017/043083

(57) **Abstract**

Disclosed are a tire fiber having high adhesion to other members, a rubber/fiber composite having improved adhesion between rubber and fiber, and a tire having high hydraulic durability. The tire fiber comprises a polyethylene-2,5-furandicarboxylate (PEF) raw yarn, wherein the PEF raw yarn comprises as a raw material PEF having a terminal carboxylic acid amount of 1 to 100 mmol/kg.

## Description

### TECHNICAL FIELD

The present disclosure relates to a tire fiber, a rubber/fiber composite, and a tire.

### BACKGROUND

Synthetic fibers made of nylon or polyethylene terephthalate (PET) have been widely used as fibers used for reinforcing cords etc. of tires. However, these synthetic fibers impose a large environmental burden because they are produced from raw materials of fossil origin.

This has led to recent development of fibers produced from raw materials of natural origin for use as fibers with a small environmental burden. For example, PTL 1 discloses a fiber made of polyethylene-2,5-furandicarboxylate (PEF) (PEF fiber).

### CITATION LIST

### Patent Literature

PTL 1: WO2014/204313

### SUMMARY

### (Technical Problem)

If adhesion between rubber and tire fiber is insufficient inside a tire, separation occurs at contact between the rubber and tire fiber, resulting in the development and expansion of a crack originating from the separation. This eventually leads to significant reductions in tire durability. For applying the PEF fiber disclosed in PTL 1 as a tire fiber, further improvement has been required in terms of physical properties of fiber, particularly adhesion to rubber.

An object of the present disclosure is to provide a tire fiber having high adhesion to other members. Another object of the present disclosure is to provide a rubber/fiber composite having improved adhesion between rubber and fiber. A further object of the present disclosure is to provide a tire having high hydraulic durability.

### (Solution to Problem)

The disclosed tire fiber is directed to a tire fiber that comprises a polyethylene-2,5-furandicarboxylate (PEF) raw yarn, wherein the PEF raw yarn comprises as a raw material PEF having a terminal carboxylic acid amount of 1 to 100 mmol/kg.

The disclosed tire fiber has high adhesion to other members.

In regard to the disclosed tire fiber, it is preferred that the PEF raw yarn has a storage modulus of 1,500 MPa or more.

With this configuration, a tire to which the tire fiber is applied has more improved hydraulic durability.

In regard to the disclosed tire fiber, it is preferred that the PEF raw yarn has a storage modulus of 2,500 MPa or more.

With this configuration, a tire to which the tire fiber is applied has much improved hydraulic durability.

In regard to the disclosed tire fiber, it is preferred that PEF in a resin composition has an intrinsic viscosity of 0.50 to 1.50 dl/g.

With this configuration, the PEF raw yarn can be easily produced by melt-spinning.

The disclosed rubber/fiber composite is characterized by including the disclosed tire fiber.

The disclosed rubber/fiber composite has improved adhesion between rubber and fiber.

The disclosed tire is characterized by including the disclosed tire fiber.

The disclosed tire has high hydraulic durability.

### (Advantageous Effect)

According to the present disclosure, it is possible to provide a tire fiber having high adhesion to other members. According to the present disclosure, it is also possible to provide a rubber/fiber composite having improved adhesion between rubber and fiber. Further, according to the present disclosure, it is possible to provide a tire having high hydraulic durability.

### BRIEF DESCRIPTION OF THE DRAWINGS

In the accompanying drawings:

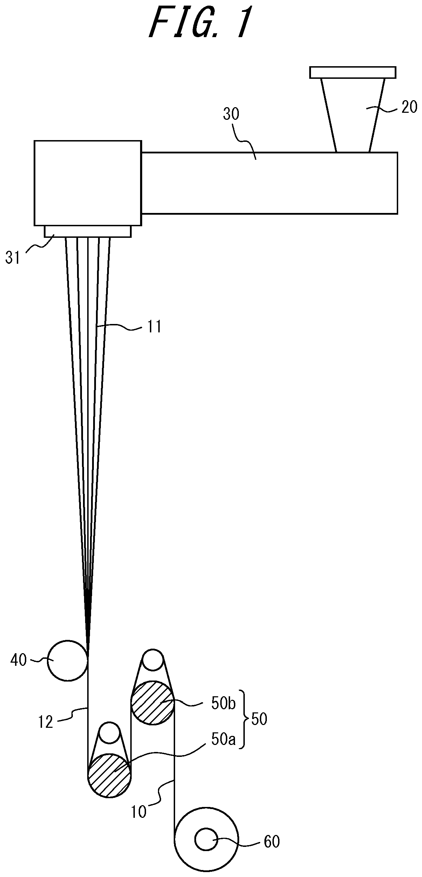

FIG. 1 is a schematic view for explaining an example of a method for producing a PEF raw yarn used for the disclosed tire fiber.

### DETAILED DESCRIPTION

The present disclosure will now be described in detail by way of embodiments.

### (Tire Fiber)

The disclosed tire fiber comprises at least a polyethylene-2,5-furandicarboxylate (PEF) raw yarn, and optionally other raw yarn(s) where necessary.

The tire fiber can be produced by spinning two or more PEF raw yarns, or one or more PEF raw yarns and one or more other raw yarns. The twist number when twisting such a raw yarn is not particularly limited and can be appropriately selected according to the purpose. Alternatively, one single PEF raw yarn can be used as the tire fiber.

The disclosed tire fiber has high adhesion to other members

### <PEF Raw Yarn>

The PEF raw yarn is produced using as a raw material PEF having a terminal carboxylic acid amount of 1 to 100 mmol/kg. For production of the PEF raw yarn, the PEF is included in a resin composition.

### <<Resin Composition>>

The resin composition comprises PEF as a raw material and optionally other component(s) where necessary.

### - PEF Included in Resin Composition-

The PEF included in the resin composition is a polymer obtainable by polycondensation of monomer components including at least furan-2,5-dicarboxylic acid and ethylene glycol in the presence of a polymerization catalyst.

The PEF included in the resin composition is not particularly limited as long as it has a terminal carboxylic acid amount of 1 to 100 mmol/kg and can be appropriately selected according to the purpose.

### -Monomer Components-

The monomer components may include, for example, terephthalic acid, 2,6-naphthalenedicarboxylic acid, propanediol and butanediol, in addition to furan-2,5-dicarboxylic acid and ethylene glycol. From the perspective of more improved storage modulus of the PEF raw yarn, however, it is preferred that the monomer components are only furan-2,5-dicarboxylic acid and ethylene glycol.

The mole ratio of furan-2,5-dicarboxylic acid to ethylene glycol (furan-2,5-dicarboxylic acid/ethylene glycol) in the monomer components is not particularly limited and can be appropriately selected depending on the purpose. The mole ratio is preferably 1/3 to 1/1, and more preferably 1/2.5 to 1/1.5. A mole ratio of 1/3 or more results in improved adhesion between the PEF raw yarn and adhesive. A mole ratio of 1/1 or less results in the PEF having a terminal carboxylic acid amount that falls within a suitable range, so that polymer degradation during or after the production process can be limited.

### -Terminal Carboxylic Acid Amount of PEF-

The terminal carboxylic acid amount of the PEF is not particularly limited as long as it is 1 to 100 mmol/kg and can be appropriately selected according to the purpose, with 5 to 50 mmol/kg being preferred. When the terminal carboxylic acid amount is 1 mmol/kg or more, the number of reaction sites on PEF at the time when it reacts with adhesives used upon formation of a composite with another member (e.g., tire rubber component) increases, so that the PEF shows increased adhesion with adhesives (e.g., epoxy resin-based adhesives). When the terminal carboxylic acid amount is 100 mmol/kg or less, a high tenacity of the PEF raw yarn can be ensured even when it is subjected to high-temperature treatment (e.g., vulcanization of tire).

The terminal carboxylic acid amount can be adjusted for example by changing the proportions of furandicarboxylic acid and ethylene glycol upon polycondensation or the molecular weight of PEF.

The terminal carboxylic acid amount refers to terminal carboxylic group content in mmol per kg of PEF and can be measured by the method described below.

2 g of PEF is dissolved in 50 mL of a 4:6 (weight ratio) mixed solution of phenol and trichloroethylene at 80°C and titrated with a mixed solution of 0.05N KOH and methanol to measure the terminal carboxyl group concentration (mmol/kg). Phenol red is used as an indicator for titration, and the time point where the phenol red turned rose pink from yellowish green is regarded as the end point of titration.

### -Molecular Weight of PEF-

The number average molecular weight (Mn) of the PEF is not particularly limited and can be appropriately selected according to the purpose; it is preferably 22,000 to 100,000, more preferably 26,000 to 75,000.

When the number average molecular weight is 22,000 or more, the tenacity of the PEF raw yarn obtained increases, and when it is 100,000 or less, a desired terminal carboxylic acid amount can be easily ensured. A number average molecular weight that falls within the more preferred range is advantageous for the same reason.

### The weight average molecular weight (Mw) of the PEF is not particularly limited and can be appropriately selected according to the purpose; it is preferably 55,000 to 200,000, and more preferably 65,000 to 150,000.

When the weight average molecular weight is 55,000 or more, the tenacity of the resulting PEF raw yarn increases, and when it is 200,000 or less, a desired terminal carboxylic acid amount can be easily ensured. A weight average molecular weight that falls within the more preferred range is advantageous for the same reason.

The weight average molecular weight refers to a value measured by GPC with polystyrene as a standard.

### --Intrinsic viscosity of PEF--

The intrinsic viscosity of the PEF is not particularly limited and can be appropriately selected according to the purpose; it is preferably 0.50 to 1.50 dl/g, and more preferably 0.70 to 1.10 dl/g.

When the intrinsic viscosity is 0.50 dl/g or more, the tenacity of the resulting PEF raw yarn increases, and when it is 1.50 dl/g or less, spinning can be easily performed. An intrinsic viscosity that falls within the more preferred range is advantageous for the same reason.

The intrinsic viscosity can be measured for example with the method in compliance with ASTM D4603 using a 4:6 (weight ratio) mixed solution of phenol and trichloroethylene as solvent.

### -PEF Production Method-

The PEF can be produced for example through a first step wherein an ester compound is obtained by reacting furan-2,5-dicarboxylic acid with ethylene glycol, and a second step wherein the ester compound is polycondensed in the presence of a polymerization catalyst. In the second step, when polycondensation is carried out under a reduced pressure of 5 to 700 Pa, the polycondensation reaction rate for obtaining PEF can be increased.

PET is a synthetic resin containing terephthalic acid synthesized from raw materials of fossil origin and imposes a large environmental burden. On the other hand, for PEF, the raw material furan-2,5-dicarboxylic acid can be produced from cellulose, glucose or other biological source and the raw material ethylene glycol can be produced from bioethanol. Thus, PEF imposes a smaller environmental burden than PET in that PEF can be prepared from bio-based sources.

### -Other Components-

Other components that may be optionally included in the resin composition where necessary are not particularly limited and can be appropriately selected according to the purpose. Examples thereof include resins such as polyamides (e.g., nylon), polyesters (e.g., polyethylene terephthalate, polyethylene naphthalate, polytrimethylene terephthalate (PTT), polybutylene terephthalate (PBT), polytrimethylene furanoate (PTF), polybutylene furanoate (PBF), and polylactic acid), polyolefins (e.g., polypropylene and polyethylene), and polyvinylidene chloride; antioxidants; ultraviolet absorbers; light stabilizers; lubricants; antistatic agents; fillers; crosslinking agents; and nucleating agents. These components may be used alone or in combination.

The PEF content in the resin composition is not particularly limited and can be appropriately selected depending on the purpose; it is preferably 75% by mass or more, and more preferably 100% by mass.

### <<PEF Raw Yarn Production Method>>

As illustrated in FIG. 1, for example, the PEF raw yarn is obtained by drawing a spun raw yarn 12, obtained by melt-spinning of a PEF-containing resin composition, into a PEF raw yarn 10 and taking up the PEF raw yarn 10.

### -Melt-Spinning-

The melt-spinning is to obtain a spun raw yarn by melting treatment and spinning treatment.

The melting treatment refers to a treatment wherein the resin composition is melted by mixing under heating. In the melting treatment, for example, as illustrated in FIG. 1, the resin composition is charged into a hopper 20 and mixed under heating.

The spinning treatment is to extrude the resin composition melted in the melting treatment into filaments and bundle the extruded filaments into a spun yarn. In the spinning treatment, for example, as illustrated in FIG. 1, the melted resin composition is extruded through a die 31 of an extruder 30 into filaments 11, and the filaments 11 are coated with an oil agent by means of an oiling roller 40 and then bundled into the spun raw yarn 12.

### -Drawing-

The drawing is to obtain a PEF raw yarn by drawing treatment.

The drawing treatment is to draw the spun yarn obtained by the melt-spinning. In the drawing treatment, for example, as illustrated in FIG. 1, the spun yarn 12 obtained by the melt-spinning is drawn by drawing rollers 50.

In the drawing treatment, for example, as illustrated in FIG. 1, drawing can be carried out using two or more drawing rollers 50 (drawing rollers 50a, 50b in the example of FIG. 1) operated at different rotation speeds (e.g., the downstream drawing roller 50b is rotated faster than the upstream drawing roller 50a).

It is advantageous to carry out the drawing treatment while heating the drawing rollers because a PEF raw yarn having a high storage modulus can be obtained.

FIG. 1 illustrates an example in which the spun raw yarn 12 obtained by melt-spinning is subjected to drawing treatment without being once recovered. Alternatively, the spun yarn obtained by melt-spinning may be once recovered, followed by drawing treatment of the recovered spun raw yarn.

### -Take-up-

The take-up is to subject the PET raw yarn to take-up treatment.

The take-up treatment is to take-up the PEF raw yarn obtained by the drawing. The take-up is, for example, as illustrated in FIG. 1, a treatment wherein the PEF raw yarn 10 obtained by drawing is taken up by a take-up machine 60.

### <<Storage Modulus of PEF Raw Yarn>>

The storage modulus of the PEF raw yarn is not particularly limited and can be appropriately selected according to the purpose; it is preferably 1,500 MPa or more (e.g., 1,500 to 5,000 MPa), and more preferably 2,500 MPa or more.

When the storage elastic modulus is 1,500 MPa or more, a tire to which such a PEF raw yarn is applied shows favorable uniformity.

### <Other Yarns>

Other raw yarns that may be included in the tire fiber are not particularly limited and can be appropriately selected according to the purpose. Examples thereof include polyamide raw yarns such as nylon raw yarn; polyester raw yarns such as PET raw yarn and PEN raw yarn; and rayon yarns. These yarns may be used alone or in combination.

### (Rubber/Fiber Composite)

The disclosed rubber/fiber composite comprises the disclosed tire fiber, wherein the disclosed tire fiber and rubber are adhered together with an adhesive.

The disclosed rubber/fiber composite has improved adhesion between rubber and fiber.

The rubber/fiber composite can be used for example as a carcass, belt, bead wire, insert, flipper, side reinforcement etc. of a tire.

Upon production of the disclosed rubber/fiber composite, adhesion of a tire fiber and a rubber component can be effected after performing dipping treatment known in the art wherein the tire fiber (or tire cord manufactured by twisting the tire fiber) is heated by being dipped in adhesive-containing liquid.

The adhesive used in the dipping treatment is not particularly limited and can be appropriately selected depending on the purpose. Examples thereof include thermoplastic polymers, thermally reactive aqueous urethane resins, epoxide compounds, and resorcinol-formalin-latex-based adhesives. These adhesives may be used alone or in combination.

### (Tire)

The disclosed tire comprises the disclosed tire fiber.

A tire that comprises the disclosed tire fiber has high hydraulic durability due to improved adhesion between rubber and fiber.

### EXAMPLES

The present disclosure will now be described in detailed based on Examples, which however shall not be construed as limiting the scope of the present disclosure.

### (Examples 1 to 6 and Comparative Examples 2 and 3)

### <Preparation of Resin Composition>

As monomer components furan-2,5-dicarboxylic acid and ethylene glycol were blended at a mole ratio presented in Table 1 to afford PEF. The PEF thus obtained was used as a resin composition.

The PEF prepared in Example 2 was a polymer having a number average molecular weight of about 34,100, a weight average molecular weight of about 72,000, and an intrinsic viscosity of 0.76 dl/g.

### <Measurement of Intrinsic Viscosity>

According to the method in compliance with ASTM D4603, an intrinsic viscosity of PEF was measured using a 4:6 (weight ratio) mixture of phenol and trichloroethylene as solvent.

### <Measurement of Terminal Carboxylic Acid Amount>

The terminal carboxylic acid amount in the resultant resin composition is expressed as terminal carboxylic group content in mmol per kg of PEF and measured by the method described below.

2 g of PEF was dissolved in 50 mL of a 4:6 (weight ratio) mixed solution of phenol and trichloroethylene at 80°C and titrated with a mixed solution of 0.05N KOH and methanol to measure the terminal carboxyl group concentration (mmol/kg). Phenol red was used as an indicator for titration, and the time point where the phenol red turned rose pink from yellowish green was regarded as the end point of titration. The measured terminal carboxyl acid amount in each resin composition is presented in Table 1.

### <Production of PEF Raw Yarn>

The resin composition thus obtained was melt-spun through a 96-hole die at an extrusion temperature of 275°C, and a spun yarn obtained by bundling 96 filaments was continuously drawn and taken up without being recovered to afford a PEF raw yarn having a fineness of 1,100 dtex (11.5 dtex per filament).

Fineness was measured as follows: 1 m of the PEF raw yarn was sampled, dried at 130°C for 30 minutes, allowed to cool to room temperature in a dried desiccator, and weighed. Fineness was calculated with 1 g per 10,000 m defined as 1 dtex.

### <Production of Tire Fiber>

First and second twists of two raw yarns of PEF thus obtained were twisted together at a twist number of 47 turns per 10 cm length to produce a tire fiber with a construction having a fineness of 1,100 dtex/2 and a twist number of 47 × 47 (turns per 10 cm).

### <Production of Tire Cord>

First and second twists of two tire fibers thus obtained were twisted together at a twist number of 47 turns per 10 cm length to produce a tire cord with a fineness of 1,100 dtex/2, twist number of 47 × 47 (turns per 10 cm) and cord count of 60 per 5 cm.

### <Manufacture of Tire>

The obtained tire cord was subjected to adhesive treatment described in WO2014/133174 to manufacture a tire cord for a carcass ply. A tire having a tire size of 195/65R15 was manufactured using the obtained tire cord for a carcass ply.

### [Evaluations]

The storage modulus of the PEF raw yarn, adhesion of the tire cord, and hydraulic durability of the tire were evaluated by the methods described below.

### <Storage Modulus>

One filament was taken out from the PEF raw yarn and measured for storage modulus (MPa) under the following measurement conditions using a dynamic viscoelasticity meter:
Initial strain: 1%
Amplitude: 0.1%
Frequency: 10 Hz
Temperature: 25°C

### <Adhesion>

A test piece was prepared by embedding the adhesive-coated tire cord produced above into an unvulcanized rubber composition that comprises 80 parts by mass of natural rubber, 20 parts by mass of styrene-butadiene copolymer rubber, 35 parts by mass of carbon black, 2 parts by mass of stearic acid, 10 parts by mass of a petroleum-based softening agent (No.2 spindle oil, Nippon Oil Corporation), 4 parts by mass of pine tar, 4 parts by mass of zinc oxide, 1.5 parts by mass of N-phenyl-β-naphthylamine, 0.75 parts by mass of 2-benzothiazyl disulfide, 0.75 parts by mass of diphenyl guanidine and 2.3 parts by mass of sulfur. The test piece was vulcanized at 160°C for 20 minutes under a pressure of 20 kgf/cm². After cooling to room temperature, the vulcanized product was dug to expose the tire cord. The resistance of peeling of the tire cord from the vulcanized product at a rate of 30cm/min was measured at room temperature of 25±1°C. The measured resistance values were evaluated with the resistance value of the tire cord of Example 5 indexed to 100. Larger index values indicate higher adhesion of the tire cord and even higher adhesion of the tire fiber. The adhesion index for each tire cord is presented in Table 1.

### <Hydraulic Durability>

The internal pressure of each tire was raised to 200 kPa by hydraulic pressure and held for 15 minutes. Subsequently, the internal pressure was raised by hydraulic pressure at 150kPa/min and the pressure until tire breakage was measured. The obtained results were evaluated with the hydraulic durability of Example 5 indexed to 100. In Table 1 larger index values indicate better hydraulic durability.

### (Comparative Example 1)

Adhesion and tire hydraulic durability were evaluated as in Example 1 except that polyethylene terephthalate (PET) was used instead of PEF. The results are presented in Table 1.

**Table1**

| | | | Comp. Ex. 1 | Comp. Ex. 2 | Ex. 1 | Ex. 2 | Ex. 3 | Ex.4 | Comp. Ex. 3 | Ex. 5 |
|---|---|---|---|---|---|---|---|---|---|---|
| Production condition | Mole ratio of monomers for polymerization to obtain PEF | Furan-2,5-dicarboxylic acid | | 3 | 20 | 27 | 27 | 40 | 100 | 27 |
| | | Ethylene glycol | | 60 | 60 | 64 | 64 | 64 | 10 | 64 |
| | PEF as raw material | Intrinsic viscosity (dl/g) | 0.76 | 0.76 | 0.76 | 0.76 | 1.10 | 0.76 | 0.76 | 0.40 |
| | PEF in resin composition | Terminal carboxylic acid amount of PEF | | 0.5 | 20 | 50 | 50 | 100 | 150 | 50 |
| | PET in resin composition | Terminal carboxylic acid amount of PET (mmol/kg) | 20 | | | | | | | |
| Evaluations | Raw yarn | Storage modulus (MPa) | 2000 | 2000 | 2000 | 2000 | 2000 | 2000 | 2000 | 1400 |
| | Tire cord | Adhesion (index) | 60 | 30 | 100 | 105 | 105 | 120 | 125 | 100 |
| | Tire | Hydraulic durability (index) | 100 | 105 | 103 | 102 | 110 | 100 | 30 | 100 |

### REFERENCE SIGNS LIST

10 PEF raw yarn
11 Filament
12 Spun raw yarn
20 Hopper
30 Extruder
31 Die
40 Oiling roller
50 Drawing roller
50a Drawing roller
50b drawing roller
60 Take-up machine

## Claims

1. A tire fiber comprising a polyethylene-2,5-furandicarboxylate (PEF) raw yarn,
wherein the PEF raw yarn comprises as a raw material PEF having a terminal carboxylic acid amount of 1 to 100 mmol/kg.

2. The tire fiber according to claim 1, wherein the PEF raw yarn has a storage modulus of 1,500 MPa or more.

3. The tire fiber according to claim 1, wherein the PEF raw yarn has a storage modulus of 2,500 MPa or more.

4. The tire fiber according to claim 1 or 2, wherein PEF in a resin composition has an intrinsic viscosity of 0.50 to 1.50 dl/g.

5. A tire/fiber composite comprising the tire fiber according to any one of claims 1 to 4.

6. A tire comprising the tire fiber according to any one of claims 1 to 4.
